# EUROPÄISCHE PATENTSCHRIFT

(11) **EP 3 085 239 B1**
(45) Veröffentlichungstag und Bekanntmachung des Hinweises auf die Patenterteilung: **17.09.2025**
(21) Anmeldenummer: 15165143.7
(22) Anmeldetag: 25.04.2015
(51) Int. Cl.: A23B 11/60, A23C 9/142, A23C 19/09, A23C 19/076

(54) **STERILE KÄSEGRUNDMASSE**
STERILE CHEESE BASE
EXCIPIENT DE FROMAGE STÉRILE

(43) Veröffentlichungstag der Anmeldung: 26.10.2016
(73) Patentinhaber: DMK Deutsches Milchkontor GmbH, 27404 Zeven (DE)
(72) Erfinder: Döring, Sven-Rainer, 27404 Zeven (DE); Euwens, Dirk, 26209 Hatten (DE); May, Martin, 26340 Neuenburg (DE)
(74) Vertreter: Fabry, Bernd

(56) Entgegenhaltungen:
- EP-A2- 0 174 847
- DE-A1- 2 300 476
- US-A- 4 401 679
- US-A1- 2003 077 357
- US-A1- 2014 017 357

## Beschreibung

### GEBIET DER ERFINDUNG

Die Erfindung befindet sich auf dem Gebiet der Käseherstellung und betrifft ein Verfahren zur Herstellung einer sterilen Käsegrundmasse.

### STAND DER TECHNIK

In Europa und den USA zählt Käse zu den wichtigsten Grundnahrungsmitteln. Für die Herstellung von Käse, sei es auf Basis von Milch oder Molke, wird die Milch von Rindern, Büffeln, Schafen oder Ziegen verwendet, die eine ausreichende Menge an Milcheiweiß Casein aufweist.

Findet Milch als Grundstoff für die Erzeugung von Käse Anwendung, kann die Ausfällung (Gerinnung) des Milcheiweißes Kasein entweder durch Lab oder durch Säuregerinnung bzw. Säurefällung erfolgen. Durch die Gerinnung von Kasein enthält der Käse seine feste Beschaffenheit. Demnach wird zwischen Labkäse (Süßmilchkäse) und Sauermilchkäse unterschieden.

Bei Labkäse erfolgt die Dicklegung durch ein Enzymgemisch aus Pepsin und Chymosin, welches im Lab enthalten ist. Beim Sauermilchkäse gerinnt Kasein durch die Milchsäurebakterien. Sauermilchkäse ist meistens Frischkäse. Es gibt jedoch auch gereiften Sauermilchkäse.

Die Milch, die zur Käseherstellung verarbeitet wird, muss strengen Qualitätsvorschriften genügen, dazu gehören die Prüfung der Milch auf bakteriologische Beschaffenheit, das Einstellen des Fettgehaltes (Hinzufügen oder Abtrennen von Rahm) sowie die Dauererhitzung, Pasteurisierung oder Hocherhitzung, sofern nicht Rohmilchkäse hergestellt werden soll

Das nachfolgende so genannte Dicklegen der Milch entscheidet mit darüber, welcher Käse entsteht. Durch Säuern mit Hilfe von Milchsäurebakterien (Leuconostoc sp., Lactococcus sp.) entstehen Frischkäse und gereifter Sauermilchkäse. Durch Lab (aus Kälbermagen oder biotechnologisch in Fermentern mit Hilfe von Schimmelpilzen Mucor mihei, Aspergillus niger hergestellt) gewinnt man Hartkäse, Schnittkäse, halbfesten Schnittkäse und Weichkäse. Kommt Lab zusammen mit Reifungskulturen (Mikroorganismen) in die Milch, so ist diese bereits nach einer halben Stunde dickgelegt. Diese Masse nennt man "Dickete", oder "Gallerte".

Bei der industriellen Käseherstellung wird die dickgelegte Milch mit der "Käseharfe" klein geschnitten. Entsprechend der weiteren Verarbeitung wird dieser Käsebruch dann noch vorsichtig erhitzt, damit sich das Bruchkorn weiter zusammenzieht (Synärese) und dabei noch mehr Molke verliert. Dieser Vorgang wird als "Brennen des Bruchs" bezeichnet. Dies geschieht je nach Käsesorte bei Temperaturen von bis zu 55 °C. Je höher die Temperatur, desto mehr Molke tritt aus und desto höher ist die Trockenmasse. Durch die weitere Verarbeitung wird der Wassergehalt und somit die Festigkeit und Lagerfähigkeit des Käses beeinflusst.

Danach kommt der Käsebruch in sortentypische Formen. Es entstehen die Käselaibe. Durch Baden in Salzlake wird den Rändern des jungen Käselaibes weiteres Wasser entzogen und die Rindenbildung vorbereitet. Der Salzgehalt der Lake beträgt je nach Käsesorte 15-22 %. Es wandert auch Salz in den Käse und trägt so zur Geschmacksbildung mit bei.

Ein wichtiges Thema im Zusammenhang mit der Herstellung von Käse ist dessen Haltbarmachung. Viele feste Käsesorten erhalten vor dem Reifen eine Schutzschicht aus Wachs oder werden immer wieder mit Salz oder Salzlake eingerieben, wodurch den äußeren Schichten das Wasser entzogen wird und die harte, trockene Käserinde entsteht. Bei richtiger Behandlung entsteht im Zusammenspiel mit Rotschmiere eine wachsartige halbweiche Rinde, die noch luftdurchlässig ist. Diese Luftdurchlässigkeit bietet dem Käse die Voraussetzung, richtig reifen zu können. Käse, der unter Luftabschluss in Wachs reift, hat weniger Charakter und schmeckt entsprechend fader. Vor dem Versand werden die Käselaibe oft in Paraffin getaucht. Die Paraffinhülle ist luftundurchlässig und soll den Reifeprozess beenden.

Einige Nationalküchen haben außerdem eine Reihe von Spezialitäten entwickelt, um weniger haltbare Käse wie Frischkäse länger lagern zu können. In der französischen Küche zählt dazu Le Pitchou oder Crottin de Berry à l'Huile d'Olive, bei der Frischkäse aus Ziegenmilch mit Öl übergossen. Gemein ist diesen ganzen bekannten Verfahren jedoch, dass die Lagerung zeitlich auf Tage bis wenige Wochen begrenzt ist und vorzugsweise im Kühlregal oder Kühlschrank bei Temperaturen unter 5 °C erfolgen sollte.

In diesem Zusammenhang sei auf die EP 1803355 A2 (KRAFT) verwiesen, aus der ein Verfahren zur Herstellung von Käseflocken bekannt ist, bei der man eine Mischung aus Fetten und Proteinen auf 0 bis 95 °C erhitzt und auf einen pH-Wert im Bereich von 5,4 bis 6 einstellt, der Mischung zunächst Salze, Emulgatoren und Hilfsstoffe und dann in einem zweiten Schritt Wasser und Füllstoffe zusetzt. Anschließend werden die Käseflocken abgefüllt und gekühlt. Dabei handelt es sich jedoch wieder um ein Endprodukt, das letztlich wieder nur eine begrenzte Haltbarkeit aufweist. DE 2300476 A1, US 2014/017357 A1 und US 2003/077357 A1 haben die Herstellung eines Zwischen-/Ausgangsprodukts der Käseherstellung zum Gegenstand, welches nicht abgefüllt wird. US 4401679 A und EP 0174847 A2 offenbaren die Herstellung eines abgefüllten Zwischenproduktes der Käseherstellung.

Die Aufgabe der vorliegenden Erfindung hat daher darin bestanden, Vorstufen für die Herstellung von Käseprodukten unterschiedlichster Art zur Verfügung zu stellen, die sich leicht zu den Endprodukten verarbeiten lassen, jedoch über eine gegenüber dem Stand der Technik deutlich längere Zeit gegen Verderben geschützt sind und gelagert werden können, ohne dass es dazu einer Kühlung bedarf.

### BESCHREIBUNG DER ERFINDUNG

Die Erfindung betrifft ein Verfahren zur Herstellung einer sterilen Käsegrundmasse, bei dem man
(a) Käsereimilch einer Temperaturbehandlung bei etwa 70 bis etwa 150 °C über einen Zeitraum von etwa 5 Sekunden bis etwa 20 Minuten unterwirft und so ein erstes Zwischenprodukt erzeugt,
(b) das temperaturbehandelte erste Zwischenprodukt bei einer Temperatur im Bereich von 30 bis 40 °C aufkonzentriert indem die Käsereimilch zum Aufkonzentrieren einer Mikrofiltration und/oder Ultrafiltration und/oder Nanofiltration unterwirft und so als zweites Zwischenprodukt eine flüssige Käsegrundmasse aufweisend eine Trockenmasse von 30 bis 60 Gew.-% erzeugt, und
(c) die flüssige Käsegrundmasse zur weiteren Verarbeitung in eine sterileVerpackung abfüllt, in der sie erstarrt,

wobei die Käsereimilch nach einem Verfahren erzeugt wird, indem man
   (i) Rohmilch einer Wärmebehandlung unterwirft,
   (ii) das wärmebehandelte Produkt von festen Bestandteilen befreit,
   (iii) das resultierende Zwischenprodukt entfettet,
   (iv) die so erhaltene Magermilch einer Mikrofiltration unterwirft und
   (v) das resultierende Permeat durch Zugabe einer Menge des im Schritt (c) abgetrennten Rahms auf den gewünschten Fettgehalt einstellt, und die so erhaltene standardisierte Milch
   (vi) abschließend pasteurisiert
und wobei der flüssigen Käsegrundmasse entweder vor oder während der Abfüllung in die sterile Endverpackung weitere Hilfs- und Zusatzstoffe ausgewählt aus der Gruppe bestehend aus Starterkulturen, Probiotische Mikroorganismen, Lab, Prebiotische Stoffe, Emulgatoren, Verdickungsmittel, Lebensmittelsäuren, Säureregulatoren, Salze (speziell Kochsalz), Gewürze, Vitamine, Antioxidantien, Aromastoffe, Geschmacksverstärker, Lebensmittelfarbstoffe und dergleichen zugesetzt werden.

Überraschenderweise wurde gefunden, das durch Sterilisation und nachfolgende Konzentrierung von Käsereimilch, speziell durch Filtrationsverfahren ein Produkt erhalten wird, das sich steril abfüllen und dann über eine lange Zeit ohne Kühlung lagern lässt, und danach auf einfachem Wege in ein verzehrfertiges Käseprodukt umgewandelt werden kann.

### KÄSEREIMILCH

Unter der Bezeichnung Käsereimilch wird eine Rohmilch bezeichnet, die nach Pasteurisierung und Fetteinstellung zur Herstellung von Käse, aber auch Joghurt, dickgelegt werden soll. Da die Käseherstellung früher überwiegend in Kesseln durchgeführt wurde - was heute teilweise auch noch für die Herstellung von Parmesan typisch ist - wird auch synonym von Kesselmilch gesprochen.

Damit Rohmilch für die Herstellung von Käse eingesetzt werden kann, muss sie gesetzlichen Anforderungen entsprechen, die in der Käseverordnung niedergelegt sind. Üblicherweise beginnt der Verarbeitungsprozess mit einer Erhitzung der Rohmilch durch Wärmeaustausch mit Wärmeträgermedien bei gleichzeitiger teilweiser Wärmerückgewinnung. Die Separation in Magermilch, Rahm und Separatorschlamm wird üblicherweise in einer Pasteurisierungseinheit mit integriertem Separator durchgeführt. Dabei wird die Erhitzung so weit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch durch erneute Erhitzung einer zweiten Pasteurisierung unterzogen.

Alternativ kann die Käsereimilch auch nach dem Verfahren der EP 2661967 A1 (DMK) erzeugt werden, indem man
(a) Rohmilch einer Wärmebehandlung unterwirft,
(b) das wärmebehandelte Produkt von festen Bestandteilen befreit,
(c) das resultierende Zwischenprodukt entfettet,
(d) die so erhaltene Magermilch einer Mikrofiltration unterwirft und
(e) das resultierende Permeat durch Zugabe einer Menge des im Schritt (c) abgetrennten Rahms auf den gewünschten Fettgehalt einstellt, und die so erhaltene standardisierte Milch
(f) abschließend pasteurisiert.

Vorzugsweise setzt man Käsereimilch ein, welche einen Fettanteil von etwa 10 bis etwa 35 Gew.-% und insbesondere etwa 15 bis etwa 22 Gew.-% sowie einen Proteinanteil von etwa 15 bis etwa 30 Gew.-% und insbesondere etwa 19 bis etwa 24 Gew.-% aufweist.

### TEMPERATURBEHANDLUNG

Im ersten Schritt des erfindungsgemäßen Verfahrens wird die Käsereimilch sterilisiert bzw. pasteurisiert, d.h. einer Temperaturbehandlung im Bereich von etwa 70 bis etwa 150 °C über einen Zeitraum von etwa 5 Sekunden bis etwa 20 Minuten unterworfen, bei der sie beispielsweise in Ultrahocherhitzern über einen Zeitraum von 5 Sekunden bis 20 Minuten und vorzugsweise 5 Sekunden bis 10 Minuten erhitzt wird. Typische Beispiele sind Behandlungen von etwa 3 bis 6 Minuten bei 120 bis 130 °C oder 1 bis 30 Sekunden bei 135 bis 150 °C. Nach dieser Behandlung sind alle thermophilen Keime und Enzyme abgetötet oder inhibiert. Danach wird die tempertaturbehandelte Käsereimilch entweder direkt in die Konzentrierungsstufe geleitet oder in einem Steriltank zwischengelagert.

### AUFKONZENTRIEREN

Grundsätzlich kann das Aufkonzentrieren durch schonendes Abdampfen des in der Käsereimilch enthaltenen Wassers erfolgen. Vorzugsweise unterwirft man diese jedoch zum Aufkonzentrieren einer Mikrofiltration und/oder Ultrafiltration und/oder Nanofiltration.

Hierbei handelt es sich um Filtrationsverfahren aus dem Bereich der Membrantechnik, mit der sich makromolekulare Substanzen und kleine Partikel aus einem Medium abtrennen und aufkonzentrieren lassen. Man unterscheidet konkret Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2 und 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 40 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Die Mikrofiltration wird in der Regel mit Membranen durchgeführt, die einen Porendurchmesser von mehr als 0,1 µm aufweisen. Für die Ultrafiltration haben sich Membranen als besonders geeignet erwiesen, die einen Porendurchmesser im Bereich 0,01 bis 0,1 µm (entsprechend einer Trennschärfe von etwa 1.000 bis etwa 50.000 und vorzugsweise etwa 5.000 bis etwa 25.000 Dalton). Die Nanofiltration bevorzugt Porendurchmesser im Bereich von kleiner 0,01 µm (entsprechend einer Trennschärfe von etwa 100 bis 5.000 und vorzugsweise etwa 500 bis 2.000 Dalton).Vorzugsweise werden Membranen mit einem Porendurchmesser im Bereich von etwa 0,01 bis etwa 0,1 mm eingesetzt,

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Keramikmembranen eingesetzt, da diese leicht und unter sterilen Bedingungen mit Wasserdampf gereinigt werden können. Alternativ können Metallmembranen verwendet werden.

Die Filtrationsverfahren werden im Sinne der vorliegenden Erfindung im Bereich von 30 bis 40 °C durchgeführt, um die Produkte flüssig zu halten.

Während das Permeat verworfen wird, wird das Retentat weiterverarbeitet. Auf diese Weise wird die Käsereimilch auf eine Trockenmasse von etwa 30 bis etwa 60 Gew.-% und insbesondere etwa 35 bis etwa 50 Gew.-% eingestellt.

### ENDABFÜLLUNG

Im letzten Schritt des Herstellungsverfahrens wird die noch flüssige Käsegrundmasse in sterile Verpackungen abgefüllt, in denen sie erstarrt. Vorzugsweise handelt es sich um Kunststoffbeutel, da mit dem Abkühlen der flüssigen Masse in den Beuteln auch noch ein Vakuumeffekt verbunden ist, der das Eindringen von Luftsauerstoff verhindert. Die BEfüllung kann unmittelbar nach Verlassen der Konzentrationsstufe, d.h. der Filtrationseinheit erfolgen, die Masse kann jedoch vorher auch noch in einen Steriltank gefahren und dort zwischengelagert werden.

Ferner werden der flüssigen Käsegrundmasse entweder vor oder während der Abfüllung in die sterile Endverpackung weitere Hilfs- und Zusatzstoffe zugesetzt, ausgewählt aus der Gruppe bestehend aus Starterkulturen, Probiotische Mikroorganismen, Lab, Prebiotische Stoffe, Emulgatoren, Verdickungsmittel, Lebensmittelsäuren, Säureregulatoren, Salze (speziell Kochsalz), Gewürze, Vitamine, Antioxidantien, Aromastoffe, Geschmacksverstärker, Lebensmittelfarbstoffe und dergleichen in Mengen von beispielsweise etwa 0,1 bis etwa 10 Gew.-%, vorzugsweise etwa 0,5 bis etwa 8 Gew.-%, insbesondere etwa 1 bis etwa 5 Gew.-% und besonders bevorzugt etwa 2 bis etwa 3 Gew.-% bezogen auf die Grundmasse.

### Starterkulturen und Probiotische Mikroorganismen

Probiotische Mikroorganismen, auch als "Probiotics" bezeichnet, die die Gruppe (N) bilden, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, kapseln, Pulver und Sachets erhältlich, die die Mikroorganismen in gefriergetrockneter Form enthalten. Tabelle A gibt einen Überblick über handelsübliche Probiotics und den zugehörigen Auslobungen zur Gesundheit, die im Sinne der vorliegenden Erfindung eingesetzt werden können.

**Tabelle A:**

| Probiotische Stoffe | | | |
|---|---|---|---|
| **Stamm** | **Bezeichnung** | **Hersteller** | **Auslobung** |
| *Bacillus coagulans* GBI-30, 6086 | GanedenBC | Ganeden Biotech | Steigert die Immunantwort bei viraler Infektion |
| *Bifidobacterium animalis* subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infantis* 35624 | Align | Procter & Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden |
| *Lactobacillus paracasei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus planta-* | GoodBelly/ Pro- | Probi | Könnte IBS Symptome verbes- |
| *rum* 299v | Viva/ProbiMage | | sern; jedoch noch mehr Studien erforderlich. |
| *Lactobacillus reuteri* American Type Culture Collection\|ATTC 55730 (*Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 *& Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei* 8700:2 | Bravo Friscus/ ProbiFrisk | Probi | Derzeit laufen Untersuchungen zur Wirksamkeit gegen Erkältungs-erkrankungen. |

Im Folgenden werden zwei weiteren Formen von Milchsäurebakterien genannt, die ebenfalls als Starterkulturen bzw. als Probiotics eingesetzt werden können:
- *Lactobacillus bulgaricus;*
- *Streptococcus thermophilus;*
- *Streptococcus thermophilus,*
- *Leuconostoc species,*
- *Lactococcus lactis subsp. lactis biovar diacetylactis,*
- *Lactococcus lactis subsp. lactis,*
- *Lactococcus lactis subsp. cremoris,* und
- *Bifido bakterium lactis B12,*

### Prebiotische Stoffe

In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400 -: Alginsäure
- E 401 -: Natriumalginat
- E 402 -: Kaliumalginat
- E 403 -: Ammoniumalginat
- E 404 -: Calciumalginat
- E 405 -: Propylenglycolalginat
- E 406 -: Agar Agar
- E 407 -: Carrgeen, Furcelleran
- E 407 -: Johannisbrotkernmehl
- E 412 -: Guarkernmehl
- E 413 -: Traganth
- E 414 -: Gummi arabicum
- E 415 -: Xanthan
- E 416 -: Karaya (Indischer Traganth)
- E 417 -: Tarakernmehl (Peruanisches Johannisbrotkernmehl)
- E 418 -: Gellan
- E 440 -: Pektin, Opekta
- E 440ii -: Amidiertes Pektin
- E 460 -: Mikrokristalline Cellulose, Cellulosepulver
- E 461 -: Methylcellulose
- E 462 -: Ethylcellulose
- E 463 -: Hydroxypropylcellulose
- E 465 -: Methylethylcellulose
- E 466 -: Carboxymethylcellulose, Natriumcarboxymethylcellulose

### Lebensmittelsäuren

Die Nahrungsmittel können Carbonsäuren enthalten. Säuren im Sinne der Erfindung sind bevorzugt in Lebensmitteln zulässige Säuren, insbesondere die hier genannten:
- E 260 -: Essigsäure
- E 270 -: Milchsäure
- E 290 -: Kohlendioxid
- E 296 -: Apfelsäure
- E 297 -: Fumarsäure
- E 330 -: Citronensäure
- E 331 -: Natriumcitrat
- E 332 -: Kaliumcitrat
- E 333 -: Calciumcitrat
- E 334 -: Weinsäure
- E 335 -: Natriumtartrat
- E 336 -: Kaliumtartrat
- E 337 -: Natrium-Kaliumtartrat
- E 338 -: Phosphorsäure
- E 353 -: Metaweinsäure
- E 354 -: Calciumtartrat
- E 355 -: Adipinsäure
- E 363 -: Bernsteinsäure
- E 380 -: Triammoniumcitrat
- E 513 -: Schwefelsäure
- E 574 -: Gluconsäure
- E 575 -: Glucono-delta-Lacton

### Säureregulatoren

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170 -: Calciumcarbonat
- E 260-263 -: Essigsäure und Acetate
- E 270 -: Milchsäure
- E 296 -: Äpfelsäure
- E 297 -: Fumarsäure
- E 325-327 -: Lactate (Milchsäure)
- E 330-333 -: Citronensäure und Citrate
- E 334-337 -: Weinsäure und Tartrate
- E 339-341 -: Orthophosphate
- E 350-352 -: Malate (Äpfelsäure)
- E 450-452 -: Di-, Tri- und Polyphosphate
- E 500-504 -: Carbonate (Kohlensäure)
- E 507 -: Salzsäure und ChlorideE 513-517Schwefelsäure und Sulfate
- E 524-528 -: Hydroxide
- E 529-530 -: Oxide
- E 355-357 -: Adipinsäure und Adipate
- E 574-578 -: Gluconsäure und Gluconate

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propy-Igallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Geschmacksverstärker

Diese Zubereitungen- wie auch die Aromamischungen- können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines an-genehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri-hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxy-phenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, die einen süßen Geruchseindruck verursachen, bevorzugt ausgewählt sind aus der Gruppe bestehend aus:

Vanillin, Ethylvanillin, Ethylvanillinisobutyrat (= 3 Ethoxy-4-isobutyryloxy-benzaldehyd), Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalac-ton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### Wirkstoffe zur Maskierung von unangenehmen Geschmackseindrücken

Weiterhin können die oralen Zubereitungen auch weitere Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotiden (z.B. Adenosin-5'-monophosphat, Cytidin-5'-monophosphat) oder deren physiologisch akzeptablen Salzen, Lactisolen, Natriumsalzen (z.B. Natriumchlorid, Natriumlactat, Natriumcitrat, Natriumacetat, Natriumgluconoat), Hydroxyflavanonen, dabei bevorzugt Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamiden, dabei vorzugsweise 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxy-benzyl)amid-Mono-natriumsalz, 2,4-Dihydroxybenzoesäure-*N*-2-(4-hydroxy-3-methoxy-phenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-*N*-[2-(4-hydroxy-3-methoxyphenyl)ethyl]amid; 4-Hydroxybenzoesäurevanillylamiden (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von Molkeproteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1955601 A1 beschrieben, die hinsichtlich dieser Verbindungen auf dem Wege der Verweisung Bestandteil dieser Anmeldung wird, oder Extrakten aus *Rubus suavissimus,* Extrakte aus *Hydrangea macrophylla* wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentischen Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### GEWERBLICHE ANWENDBARKEIT

Die so hergestellten Käsegrundmassen können zur Herstellung von verzehrfertigen Käseprodukten verwendet werden.

### BEISPIELE

### BEISPIEL 1 (nicht erfindungsgemäß )

1000 Liter Kesselmilch mit einen Gehalt von 3,3 Gew.-% Fett, 4,3 Gew.-% Lactose und 3,6 Gew.-% Eiweiß wurden 2 Sekunden lang durch Direktinjektion von Wasserdampf auf 138 °C erhitzt und sterilisiert. Das sterile Produkt wurde einer Mikrofiltration bei 45 °C unterworfen (Konzentrierungsfaktor 8), wobei 875 Liter Permeat anfielen. Die resultierenden 125 Liter Retentat wurden mit Lab, Säureregulator und Gewürzen versetzt und dick gelegt. Anschließend wurde die sterile Käsegrundmasse abgefüllt.

## Patentansprüche

1. Verfahren zur Herstellung einer sterilen Käsegrundmasse, bei dem man
(a) Käsereimilch einer Temperaturbehandlung bei etwa 70 bis etwa 150 °C über einen Zeitraum von etwa 5 Sekunden bis etwa 20 Minuten unterwirft und so ein erstes Zwischenprodukt erzeugt,
(b) das temperaturbehandelte erste Zwischenprodukt bei einer Temperatur im Bereich von 30 bis 40 °C aufkonzentriert indem die Käsereimilch zum Aufkonzentrieren einer Mikrofiltration und/oder Ultrafiltration und/oder Nanofiltration unterwirft und so als zweites Zwischenprodukt eine flüssige Käsegrundmasse aufweisend eine Trockenmasse von 30 bis 60 Gew.-% erzeugt, und
(c) die flüssige Käsegrundmasse zur weiteren Verarbeitung in eine sterile Verpackung abfüllt, in der sie erstarrt,
wobei die Käsereimilch nach einem Verfahren erzeugt wird, indem man
(i) Rohmilch einer Wärmebehandlung unterwirft,
(ii) das wärmebehandelte Produkt von festen Bestandteilen befreit,
(iii) das resultierende Zwischenprodukt entfettet,
(iv) die so erhaltene Magermilch einer Mikrofiltration unterwirft und
(v) das resultierende Permeat durch Zugabe einer Menge des im Schritt (c) abgetrennten Rahms auf den gewünschten Fettgehalt einstellt, und die so erhaltene standardisierte Milch
(vi) abschließend pasteurisiert
und wobei der flüssigen Käsegrundmasse entweder vor oder während der Abfüllung in die sterile Endverpackung weitere Hilfs- und Zusatzstoffe ausgewählt aus der Gruppe bestehend aus Starterkulturen, Probiotische Mikroorganismen, Lab, Prebiotische Stoffe, Emulgatoren, Verdickungsmittel, Lebensmittelsäuren, Säureregulatoren, Salze (bevorzugt Kochsalz), Gewürze, Vitamine, Antioxidantien, Aromastoffe, Geschmacksverstärker, Lebensmittelfarbstoffe zugesetzt werden.

2. Verfahren nach Anspruch 1, **dadurch gekennzeichnet, dass** man Käsereimilch einsetzt, welche einen Fettanteil von 10 bis 35 Gew.-% und einen Proteinanteil von 15 bis 30 Gew.-% aufweist.

3. Verfahren nach mindestens einem der Ansprüche 1 bis 2, **dadurch gekennzeichnet, dass** man die temperaturbehandelte Käsereimilch vor dem Aufkonzentrieren in einem Steriltank zwischenlagert.

4. Verfahren nach Anspruch 1, **dadurch gekennzeichnet, dass** man die Filtration in Schritt (b) unter Verwendung einer Keramikmembran durchführt.

5. Verfahren nach Anspruch 1, **dadurch gekennzeichnet, dass** man die Filtration in Schritt (b) unter Einsatz einer Metallmembran durchführt.

6. Verfahren nach Anspruch 1, **dadurch gekennzeichnet, dass** man die Filtration in Schritt (b) unter Einsatz von Membranen durchführt, die eine Porengröße von 0,01 bis 0,1 mm aufweisen.

7. Verfahren nach mindestens einem der Ansprüche 1 bis 6, **dadurch gekennzeichnet, dass** man die flüssige Käsegrundmasse vor der Endabfüllung in einem Steriltank zwischenlagert.

## Claims

1. A process for producing a sterile cheese base, in which
(a) cheese milk is subjected to a temperature treatment at approximately 70 to approximately 150 °C for a period of approximately 5 seconds to approximately 20 minutes, thereby producing a first intermediate product,
(b) the temperature-treated first intermediate product is concentrated at a temperature in the range of 30 to 40 °C by subjecting the cheese milk to microfiltration and/or ultrafiltration and/or nanofiltration for concentration, thereby producing a liquid cheese base material as a second intermediate product having a dry matter content of 30 to 60% by weight, and
(c) filling the liquid cheese base into sterile packaging for further processing, where it solidifies,
wherein the cheese milk is produced by a process comprising
(i) subjecting raw milk to heat treatment,
(ii) removing solid components from the heat-treated product,
(iii) the resulting intermediate product is defatted,
(iv) the skimmed milk thus obtained is subjected to microfiltration, and
(v) the resulting permeate is adjusted to the desired fat content by adding an amount of the cream separated in step (c), and the standardised milk thus obtained
(vi) is finally pasteurised
and wherein further additives and auxiliary substances selected from the group consisting of starter cultures, probiotic microorganisms, rennet, prebiotic substances, emulsifiers, thickening agents, food acids, acidity regulators, salts (preferably table salt), spices, vitamins, antioxidants, flavourings, flavour enhancers, food colourings.

2. The process according to claim 1, **characterised in that** cheese milk is used which has a fat content of 10 to 35% by weight and a protein content of 15 to 30% by weight.

3. The process according to at least one of claims 1 to 2, **characterised in that** the temperature-treated cheese milk is temporarily stored in a sterile tank before concentration.

4. The process according to claim 1, **characterised in that** the filtration in step (b) is carried out using a ceramic membrane.

5. The according to according to claim 1, **characterised in that** the filtration in step (b) is carried out using a metal membrane.

6. The process according to claim 1, **characterised in that** the filtration in step (b) is carried out using membranes having a pore size of 0.01 to 0.1 mm.

7. The process according to at least one of claims 1 to 6, **characterised in that** the liquid cheese mass is temporarily stored in a sterile tank before final filling.

## Revendications

1. Procédé de fabrication d'une masse de base stérile pour fromage, dans lequel
(a) on soumet du lait de fromagerie à un traitement thermique à une température comprise entre environ 70 et environ 150 °C pendant une durée comprise entre environ 5 secondes et environ 20 minutes, pour obtenir ainsi un premier produit intermédiaire,
(b) on concentre le premier produit intermédiaire traité thermiquement à une température comprise entre 30 et 40 °C en soumettant le lait de fromagerie à une microfiltration et/ou une ultrafiltration et/ou une nanofiltration afin de le concentrer, et on obtient ainsi, comme deuxième produit intermédiaire, une masse fromagère liquide présentant une matière sèche comprise entre 30 et 60 % en poids, et
(c) on conditionne la masse fromagère liquide dans un emballage stérile pour la transformation ultérieure, dans lequel elle se solidifie,
le lait de fromagerie étant produit selon un procédé dans lequel
(i) on soumet le lait cru à un traitement thermique,
(ii) on débarrasse le produit traité thermiquement des composants solides,
(iii) on dégraisse le produit intermédiaire obtenu,
(iv) on soumet le lait écrémé ainsi obtenu à une microfiltration et
(v) on ajuste la teneur en matière grasse du perméat obtenu en ajoutant une quantité de la crème séparée à l'étape (c) jusqu'à la teneur souhaitée, et le lait standardisé ainsi obtenu
(vi) est ensuite pasteurisé
et dans lequel on ajoute à la masse fromagère liquide, soit avant soit pendant le remplissage dans l'emballage final stérile, d'autres adjuvants et additifs choisis parmi le groupe constitué par les cultures starter, les micro-organismes probiotiques, la présure, les substances prébiotiques, émulsifiants, des épaississants, des acides alimentaires, des régulateurs d'acidité, des sels (de préférence du sel de cuisine), des épices, des vitamines, des antioxydants, des arômes, des exhausteurs de goût, des colorants alimentaires.

2. Procédé selon la revendication 1, **caractérisé en ce que** l'on utilise du lait fromager présentant une teneur en matières grasses de 10 à 35 % en poids et une teneur en protéines de 15 à 30 % en poids.

3. Procédé selon au moins l'une des revendications 1 à 2, **caractérisé en ce que** le lait de fromagerie traité thermiquement est entreposé dans une cuve stérile avant d'être concentré.

4. Procédé selon la revendication 1, **caractérisé en ce que** la filtration à l'étape (b) est effectuée à l'aide d'une membrane céramique.

5. Procédé selon la revendication 1, **caractérisé en ce que** la filtration à l'étape (b) est réalisée à l'aide d'une membrane métallique.

6. Procédé selon la revendication 1, **caractérisé en ce que** la filtration à l'étape (b) est réalisée à l'aide de membranes présentant une taille de pores comprise entre 0,01 et 0,1 mm.

7. Procédé selon au moins l'une des revendications 1 à 6, **caractérisé en ce que** la masse de fromage liquide est entreposée dans une cuve stérile avant le conditionnement final.
